# EUROPÄISCHE PATENTSCHRIFT

(11) **EP 0 599 869 B1**
(45) Veröffentlichungstag und Bekanntmachung des Hinweises auf die Patenterteilung: **21.06.1995**
(21) Anmeldenummer: 92915812.9
(22) Anmeldetag: 23.07.1992
(51) Int. Cl.: C23C 16/26, C23C 16/40, C23C 28/04

(54) **HERSTELLUNG VON WERKZEUG MIT VERSCHLEISSFESTER DIAMANTSCHNEIDE**
MANUFACTURE OF A TOOL WITH WEAR-RESISTANT DIAMOND CUTTING EDGE
FABRICATION D'UN OUTIL A TRANCHANT DIAMANTE RESISTANT A L'USURE

(30) Priorität: 14.08.1991 DE 4126852
(43) Veröffentlichungstag der Anmeldung: 08.06.1994
(73) Patentinhaber: Widia GmbH, 45145 Essen (DE)
(72) Erfinder: KÖNIG, Udo, D-4300 Essen 1 (DE); TABERSKY, Ralf, D-4250 Bottrop (DE)
(74) Vertreter: Vomberg, Friedhelm, Dipl.-Phys.
(86) Internationale Anmeldenummer: DE9200610
(87) Internationale Veröffentlichungsnummer: WO9304213

(56) Entgegenhaltungen:
- WO-A-87/05831
- DE-A- 3 841 730
- US-A- 4 341 834

## Beschreibung

Die Erfindung betrifft ein Werkzeug mit verschleißfester Diamantschneide, wobei die Oberfläche des Werkzeuges Diamantkristalle aufweist, ein Verfahren zu dessen Herstellung sowie dessen Verwendung.

Es ist seit langem bekannt, zur spanenden Bearbeitung von besonders harten Werkstoffen, beispielsweise Gestein, Verbundstoffen mit mineralischen Füllstoffen, Aluminium-Silizium-Legierungen u.dgl. Werkzeuge aus einkristallinem oder polykristallinem Diamant (Monoblocks) oder Werkzeuge, bei denen die Schneidkanten durch meist eingelötete oder eingeklebte Einsätze aus einkristallinen oder polykristallinen Diamantkörpern (Inlays) verstärkt sind, oder Werkzeuge, bei denen mindestens eine Schneidkante mit polykristallinem oder amorphem Diamant beschichtet ist, zu verwenden.

Es hat sich jedoch gezeigt, daß aus Diamant bestehende oder mit Diamant besetzte bzw. beschichtete Werkzeuge trotz ihrer ansonsten guten Verschleißeigenschaften für die Zerspanung von kohlenstoffaffinen Werkstoffen, insbesondere Eisen- oder Stahlwerkstoffen nicht geeignet sind, sondern gerade bei dieser Werkstoffgruppe bei Zerspanungstemperaturen oberhalb von 700 °C ein besonders starker Verschleiß der Diamantschneide auftritt. Ursache hierfür ist ein im Detail noch nicht geklärter Diffusionsverschleiß an der Schneide.

Polykristalline Diamanten bestehen aus einer Vielzahl von meist synthetisch hergestellten Diamanteinzelkristallen, die durch ein metallisches Bindemittel (z.B. Fe, Ni, Co u.a.) unter Hochdruck zu einem massiven Körper verbunden werden.

Daneben sind auch bindemetallfreie, polykristalline Diamanten bekannt.

Beispielsweise wird in B. Lux, R. Haubner "Low Pressure Synthesis of Superhard Coatings", Proceedings of the 12th International Plansee Seminar 1989, Volume 3, p. 615 - 660, beschrieben, in einem Hochtemperatur-CVD-Verfahren einen etwa 0,5 mm dicken, bindemetallfreien polykristallinen Diamantkörper mit rauher Oberfläche durch Abscheidung auf ein glattes Tragersubstrat herzustellen. Der Diamantkörper wird von dem Trägersubstrat abgelöst und anschließend als Inlay in einem Werkzeug befestigt. Dabei wird die rauhe Oberfläche des Diamantkörpers als Haftgrund und die von dem Trägersubstrat abgelöste, glatte Fläche des polykristallinen, bindemetallfreien Diamanten als Schneidkante oder dgl. benutzt.

Mit Diamant beschichtete Werkzeuge bestehen in der Regel aus einem Substratkörper, mindestens einer diamantfreien Zwischenschicht und der äußeren polykristallinen oder amorphen Diamantschicht. Die Zwischenschicht ist erforderlich, um eine ausreichende Haftung der Diamantschicht auf dem aus dem Substratkörper und der Zwischenschicht gebildeten Verbundkörper zu gewährleisten.

So wird beispielsweise in der EP 0 166 708 vorgeschlagen, Substratkörper aus Metall, einer Metallegierung, Hartmetall oder Keramik, die mit polykristallinem Diamant beschichtet werden sollen, mit einer dünnen Zwischenschicht aus Edelmetallen oder Carbiden, Nitriden, Carbonitriden, Oxicarbiden, Oxiden oder Boriden der Metalle der Gruppe IVb bis VIb des Periodensystems und Mischungen derselben zu versehen.

R. Funk, B. Lux und P. Stecker (siehe Wear, Bd. 32 (1974), Seite 391 - 393) haben vorgeschlagen, mit Diamant bewehrte Werkzeuge durch das Verankern von Diamant-Pulver mit einer Korngröße < 10 »m in Hartmetall durch Drucksintern herzustellen. Nach einem weiteren Herstellungsverfahren sollen Werkzeug mit glatter, diamanthaltiger Oberfläche dadurch geschaffen werden, daß feinste Diamantpulver (Korngröße < 1 »m) in Schichten aus reinem Hartstoff, z.B. in aus der Gasphase abgeschiedenem TiC, verankert wird.

Um die Verankerung der Diamanten in der Hartstoffschicht zu verbessern und die Verschleißfestigkeit der Diamantschneide zu erhöhen, haben R. Bichler, J. Peng, R. Haubner, B. Lux (siehe "Preparation of a diamond/corundum layer composite using low pressure diamond pa-cvd", 3^{rd} International Conference on the Science of Hard Materials, 8-13 Nov. 1987 Nassau) vorgeschlagen, die Oberfläche eines Hartmetallverbundkörpers auf WC-Basis, in dessen 6 »m dicken TiC-Schicht Diamantkristalle mit einem Durchmesser von 10 bis 12 »m in einer Dichte von 1 Kristall/100 »m², also unter Vermeidung der Ausbildung einer geschlossenen Diamantschicht, verankert sind, in einem nachgeschalteten Hochtemperatur-CVD-Prozeß mit einer 3 »m dicken, kristallinen Al₂O₃-Schicht zu überziehen.

So hergestellte Schneidkörper haben jedoch folgende Nachteile:
Die verankerten Diamanten bilden keine geschlossene, den Verbundkörper vollständig bedeckende Schicht, so daß die gute Schneidwirkung des Diamants nur unvollständig ausgenutzt wird.

Aufgrund thermischer Spannungen beim Abkühlen infolge der unterschiedlichen Wärmeausdehnungskoeffizienten von Diamant und Al₂O₃, weist die auf den Diamantkristallen haftende Al₂O₃-Schicht Risse auf.

Außerdem haftet die Al₂O₃-Schicht relativ schwach auf dem Diamant.

Ein geeignetes Verfahren zur Herstellung verschleißmindernder Beschichtungen ist der CVD-Prozeß (Chemical-Vapor-Deposition). Bei diesem Verfahren wird die verschleißmindernde Schicht bei hohen Temperaturen aus der Gasphase abgeschieden. Daneben sind plasmaaktivierte CVD-Verfahren bekannt, die bei niedrigen Gasphasentemperaturen arbeiten.

Beispielsweise wird in der DE 38 41 730 und der DE 38 41 731 ein Puls-Plasma-CVD-Verfahren zum Beschichten eines metallischen Grundkörpers mit einem nichtleitenden Beschichtungsmaterial, insbesondere Al₂O₃, beschrieben, bei dem an den als Kathode geschalteten Grundkörper eine gepulste Gleichspannung von 200 bis 900 Volt mit einer Pulsdauer von 50 »s angelegt wird, wobei in den Pulspausen von 80 »s eine Restspannung erhalten bleibt, die größer als das niedrigste Ionisierungspotential der am CVD-Prozeß beteiligten Moleküle, jedoch nicht größer als 50 % der maximalen Spannung ist, und bei dem die Beschichtung bei Gasphasentemperaturen zwischen 400 °C und 800 °C durchgeführt wird.

Der Erfindung liegt nun die Aufgabe zugrunde, ein Werkzeug mit verschleißfester Diamantschneide zu schaffen, dessen Verschleißeigenschaften unter Vermeidung der oben beschriebenen Nachteile erheblich verbessert sind.

Es ist ferner Aufgabe der vorliegenden Erfindung, ein Verfahren zur Herstellung des Werkzeuges mit verschleißfester Diamantschneide zu schaffen.

Schließlich ist es Aufgabe der vorliegenden Erfindung, die Verwendung des Werkzeuges mit verschleißfester Diamantschneide anzugeben.

Die der Erfindung zugrundeliegende Aufgabe wird durch das im Anspruch 1 beschriebene Werkzeug gelöst, dessen sich ganz oder teilweise über das Werkzeug erstreckende geschlossene Diamantschicht ganz oder teilweise mit einer dünnen Schicht von mindestens 1 »m Dicke aus einem oder mehreren Metalloxiden bedeckt ist.

Die Dicke der Oxid-Schicht beträgt 1 bis 3 »m, während die Dicke der Diamantschicht 0,5 »m bis zu 2 mm beträgt.

Außerdem weisen die auf Diamant abgeschiedenen Oxid-Schichten eine besonders feinkristalline Struktur auf und/oder sie sind rißfrei.

Für die metallische Oxid-Schicht werden die Oxide der Metalle Zirkonium und/oder Yttrium und/oder Magnesium und/oder Titan und/oder Aluminium verwendet Vorzugsweise werden Schichten aus Aluminiumoxid aufgebracht.

Überraschenderweise hat sich nämlich gezeigt, daß ein derartig gestaltetes Werkzeug bei der Zerspanung verschiedenster Werkstoffe nicht nur eine hervorragende Verschleißbeständigkeit aufweist, sondern aufgrund des geringen Verschleißes der Diamantschneide sogar zur spanenden Bearbeitung von kohlenstoffaffinen Werkstoffen, insbesondere eisenhaltigen Werkstoffen und Stählen geeignet ist.

Bei einer Untersuchung einer erfindungsgemäßen AluminiumOxid-Schicht auf einer Unterlage aus polykristallinem Diamant mit einem Microhärte-Testgerät wurde beispielsweise festgestellt, daß die beobachteten Vickers-Härtewerte der erfindungsgemäße Al₂O₃-Schicht (HV05 = 2800 bis 3500) beträchtlich höher sind als die bekannten Werte des Al₂O₃ (HV05 = 1800 bis 2200). Offensichtlich setzt die durch die sehr harte Diamantunterlage abgestützte dünne Aluminiumoxid-Schicht dem Eindringkörper einen erheblich größeren Widerstand entgegen.

Nach einer besonders vorteilhaften Ausgestaltung der Erfindung wird die erfindungsgemäße Oxid-Schicht auf eine, einen Verbundkörper dicht bedeckende, polykristalline oder amorphe Diamantschicht aufgebracht, wobei sich zwischen der Diamantschicht und dem Substratkörper mindestens eine diamantfreie Zwischenschicht befindet, die aus den Metallen der Gruppe IVb bis VIb des Periodensystems und /oder Carbiden und/oder Nitriden und/oder Carbonitriden und/oder Carbiden der Elemente der Gruppe IVb bis VIb des Periodensystems, vorzugsweise TiC und/oder harten Borverbindungen, z.B. TiB₂, B₄C, CBN, sowie Edelmetallen besteht.

Als Substratkörper werden Hartmetalle oder Schneidkeramiken oder Siliziumnitrid oder Silizium-Aluminium-Oxinitrid oder Cermets oder Werkzeugstähle verwandt.

Nach einer weiteren Ausgestaltung der Erfindung wird die erfindungsgemäße Oxid-Schicht auf ein Werkzeug mit einem Einsatz aus einkristallinem oder polykristallinem Diamant (Inlay) aufgetragen.

Schließlich kann die erfindungsgemäße Oxid-Schicht auf einkristalline oder polykristalline Diamanten aufgebracht werden, die in Form ganzer Körper (Monoblock) als Schneidwerkzeug verwendet werden.

Die in den verschiedenen Ausführungsformen der Erfindung verwandten polykristallinen Diamanten können bindemetallfrei sein oder 5 bis 50 Gew.-%, vorzugsweise 10 bis 25 Gew.-%, metallisches oder keramisches Bindemittel enthalten. Als metallische Bindemittel werden Cobalt, Nickel, Wolfram und andere Metalle, vorzugsweise Cobalt, verwandt.

Nach einer weiteren, besonders vorteilhaften Ausgestaltung der Erfindung wird die Oxid-Schicht nicht auf die gesamte mit Diamant bedeckte Fläche abgeschieden, sondern nur dort, wo die Diamantschneide dem Verschleiß tatsächlich ausgesetzt ist, so daß der Diamant bzw. die Diamantschicht nur teilweise mit der Oxid-Schicht bedeckt ist.

Nach einer weiteren Ausgestaltung der Erfindung werden voneinander verschiedene Oxid-Schichten im Wechsel auf die Oberfläche eines Werkzeuges, das ganz oder teilweise aus Diamant besteht, abgeschieden.

Diese Mehrfachbeschichtung kann auch nur dort aufgebracht werden, wo die Diamantschneide dem Verschleiß tatsächlich ausgesetzt ist, so daß der Diamant bzw. die Diamantschneide nur teilweise mit der Mehrfachbeschichtung aus voneinander verschiedenen Oxid-Schichten bedeckt ist.

Die der Erfindung zugrundeliegende Aufgabe wird ferner durch ein Verfahren zur Herstellung des Werkzeuges mit verschleißfester Diamantschneide gelöst, nach dem die verschleißmindernde Schicht, bestehend aus einem oder mehreren Metalloxiden, auf den Diamant bei Gasphasentemperaturen bis zu 800 °C aufgebracht wird. Vorzugsweise beträgt die Gasphasentemperatur 400 °C bis 600 °C.

Überraschenderweise hat sich nämlich gezeigt, daß der Verbund zwischen Diamant bzw. Diamantschicht und der Oxid-Schicht bei Anwendung niedriger Abscheidungstemperaturen besonders gut ist, und die so aufgebrachte Oxid-Schicht auf dem Diamant fest haftet.

Außerdem ist die Oxid-Schicht weitgehend dicht und weist keine Risse auf.

Da die Abscheidung der Oxid-Schicht bei wesentlich niedrigeren Temperaturen als im Hochtemperatur-CVD-Prozeß erfolgt, sind die bei der Abkühlung des beschichteten Körpers infolge der unterschiedlichen Wärmeausdehnungskoeffizienten auftretenden thermischen Spannungen zwischen der Oxid-Schicht und dem Diamant wesentlich geringer, so daß Rißbildung vermieden wird und eine weitgehend dichte Oxid-Schicht entsteht. Dies gilt insbesondere für Al₂O₃-Schichten.

Ein weiterer Vorteil des erfindungsgemäßen Verfahrens besteht darin, daß Werkzeuge mit eingelöteten oder eingeklebten Inlays als komplettes Werkzeug, d.h., mit bereits befestigtem Diamanten beschichtet werden können, da bei dem erfindungsgemäßen Beschichtungsverfahren die Gasphasentemperaturen so gewählt werden können, daß die Schmelztemperatur des Lotes oder Klebstoffes nicht erreicht wird.

Durch diese Maßnahme wird insbesondere vermieden, daß die aufgebrachte Oxid-Schicht bei dem sonst erforderlichen nachträglichen Einbau beschädigt wird.

Nach der Erfindung ist es besonders vorteilhaft, zur Herstellung der Oxid-Schicht plasmaaktivierte CVD-Verfahren, insbesondere das Puls-Plasma-CVD-Verfahren, anzuwenden.

Bei Anwendung des Puls-Plasma-CVD-Verfahrens konnten bei Einstellung folgender Versuchsparameter besonders gute Ergebnisse bei der Herstellung von Oxid-Schichten erzielt werden:

| | |
|---|---|
| Temperatur der Gasphase: | 400 °C bis 600 °C |
| Gleichspannung: | - 300 V bis 600 V |
| Restspannung: | - 20 V bis 60 V |
| Pulsdauer: | 30 »s bis 60 »s |
| Pulspause: | 40 »s bis 100 »s |
| Gasdruck: | 50 Pa bis 500 Pa |

Der zu beschichtende Körper wurde als Kathode geschaltet.

Die der Erfindung zugrundeliegende Aufgabe wird schließlich durch die Verwendung des Werkzeuges mit verschleißfester Diamantschneide für die spanende Bearbeitung von kohlenstoffaffinen Werkstoffen gelöst.

Nach der Erfindung ist es besonders vorteilhaft, das Werkzeug mit verschleißfester Diamantschneide zur Zerspanung von Eisen- und Stahlwerkstoffen einzusetzen.

Der Gegenstand der Erfindung wird nachfolgend anhand von Ausführungsbeispielen erläutert.

### Beispiel 1

Eine Wendeschneidplatte der Form SCMW 120408 (Bezeichnung noch DIN 4987) bestehend aus einer Hartmetallegierung mit 94 Gew.-% Wolframcarbid und 6 Gew. -% Cobalt, versehen mit einer etwa 2 »m dicken Zwischenschicht aus Molybdän wurde durch ein Hochtemperatur-CVD-Verfahren an einer Schneidecke mit einer ca. 6 »m dicken Schicht aus polykristallinem Diamant beschichtet.

Diese Wendeschneidplatte wurde anschließend nach dem Puls-Plasma-CVD-Verfahren gemäß DE 38 41 730 und DE 38 41 731 unter folgenden Versuchsparametern mit Al₂O₃ beschichtet:

| | |
|---|---|
| Gasphasentemperatur: | 600 °C |
| Gasdruck: | 250 Pa |
| Gleichspannung: | - 550 V |
| Restspannung: | - 40 V |
| Pulslänge: | 50 »s |
| Pulsdauer: | 80 »s |
| Beschichtungsdauer: | 2 h |

Eine nachfolgende Untersuchung der mit Al₂O₃ beschichteten Wendeschneidplatten ergab, daß sich eine 2 »m dicke Schicht aus Al₂O₃ abgelagert hatte, die sehr gut auf dem Hartmetallverbundkörper haftete. Durch eine Röntgenbeugungsanalyse wurde festgestellt, daß es sich um sehr feinkörniges Aluminiumoxid der Alpha-Modifikation handelt. Die Vickers-Härte der Al₂O₃-Schicht auf der Diamantschicht wurde zu HV0,05 = 3100 ermittelt. Risse in der Al₂O₃-Schicht wurden nicht festgestellt.

Die erfindungsgemäße Wendeschneidplatte wurde anschließend in einem Zerspanungsversuch einem Vergleich mit einer gleichen, aber nicht mit Al₂O₃ beschichteten Wendeschneidplatte unterzogen.

Die Versuche wurden als Drehversuche im kontinuierlichen Schnitt an einem Kugellagerstahl 100Cr6 mit einer Rockwell-Härte von 60 HRC durchgeführt. Die Schnittgeschwindigkeit betrug 130 m pro Minute, die Schnittiefe 0,5 mm und der Vorschub 0,08 mm pro Umdrehung. Die Versuche wurden beendet, wenn eine Verschleißmarkenbreite von 0,2 mm festgestellt wurde.

Diese Verschleißmarkenbreite ergab sich bei nicht mit Al₂O₃, also nur mit polykristallinem Diamant beschichteten Wendeschneidplatten nach 12 Minuten, während die erfindungsgemäße, zusätzlich mit Al₂O₃ beschichtete Wendeschneidplatte erst nach 65 Minuten Einsatzdauer eine entsprechende Verschleißmarke aufwies.

### Beispiel 2

In eine Vertiefung einer Hartmetallwendeschneidplatte bestehend aus 94 Gew.-% Wolframcarbid und 6 Gew.-% Cobalt der Form SCMW 120408 (Bezeichnung nach DIN 4987) wurde ein ca. 3 x 3 x 0,5 mm großes Inlay aus kompaktiertem, polykristallinem Diamant mit einem bei 800 °C schmelzenden Lot befestigt. Der Bindemetallgehalt des polykristallinen Diamanten betrug 16 Gew.-%. Als Bindemetall wurde eine Cobalt-Wolfram-Legierung verwandt.

Diese Wendeschneidplatten wurde anschließend unter den in Beispiel 1 genannten Versuchsparametern mit Al₂O₃ beschichtet.

Die nachfolgende Untersuchung der mit Al₂O₃ beschichteten Wendeschneidplatte ergab, daß die gesamte Oberfläche der Wendeschneidplatte einschließlich des Diamant-Inlays mit einer 2 »m dicken, auf dem Diamant fest haftenden Schicht aus feinverteiltem, polykristallinem Al₂O₃ der Alpha-Modifikation bedeckt war. Auf dem Diamant-Inlay hatte die Al₂O₃-Schicht eine Vickers-Härte von HV005 = 3000. Das eingelötete Inlay war nach dem Beschichtungsvorgang in unveränderter Lage noch fest mit dem Hartmetallträger verbunden.

An einem Kugellagerstahl 100Cr6 mit einer Rockwell-Härte von 60 HRC wurden mit der erfindungsgemäßen Wendeschneidplatten mit Diamant-Inlay Drehversuche im kontinuierlichen Schnitt im Vergleich mit gleichen, aber nicht mit Al₂O₃ beschichteten Wendeschneidplatten unter den in Beispiel 1 genannten Versuchsbedingungen durchgeführt.

Bei nicht mit Al₂O₃ beschichteten Wendeschneidplatten mit Diamant-Inlay wurde die Verschleißmarkenbreite von 0,2 mm bereits nach 12 Minuten erreicht, während die mit einem Diamant-Inlay versehenen und mit Al₂O₃ beschichteten Wendeschneidplatten erst nach einer Einsatzdauer von 68 Minuten Verschleißmarken von 0,2 mm Breite aufwiesen.

## Patentansprüche

1. Werkzeug mit verschleißfester Diamantschneide, wobei die Oberfläche des Werkzeuges Diamantkristalle aufweist,
**dadurch gekennzeichnet,**
daß eine sich ganz oder teilweise über das Werkzeug erstreckende geschlossene Diamantschicht ganz oder teilweise mit einer dünnen Schicht aus einem oder mehreren Metalloxiden bedeckt ist.

2. Werkzeug mit verschleißfester Diamantschneide nach Anspruch 1, dadurch gekennzeichnet, daß die Oxid-Schicht 0,5 bis 6 »m, vorzugsweise 1 bis 3 »m, und/oder die Diamantschicht 0,5 »m bis 2 mm dick ist und/oder feinkristallin und/oder rißfrei ist.

3. Werkzeug mit verschleißfester Diamantschneide nach einem der Ansprüche 1 bis 2, dadurch gekennzeichnet, daß die Oxid-Schicht aus mindestens einem Oxid der Metalle Magnesium und/oder Yttrium und/oder Titan und/oder Zirkonium und/oder Aluminium besteht.

4. Werkzeug mit verschleißfester Diamantschneide nach einem der Ansprüche 1 bis 3, dadurch gekennzeichnet, daß die Oberfläche aus Diamant nur an den durch Verschleiß beanspruchten Stellen mit der Oxid-Schicht bedeckt ist und/oder die Oxid-Schicht auf einen mindestens an einer Schneidkante mit Diamant beschichteten Verbundkörper aufgebracht ist, wobei die Diamantschicht auf dem Verbundkörper vorzugsweise aus amorphem Diamant besteht, oder daß der Verbundkörper aus einem Substratkörper und mindestens einer diamantfreien Zwischenschicht besteht.

5. Werkzeug mit verschleißfester Diamantschneide nach einem der Ansprüche 1 bis 4, dadurch gekennzeichnet, daß die Oxid-Schicht auf einem einkristallinen Diamanteinsatz (Inlay) oder Diamanten (Monoblock) oder auf einem polykristallinen Diamanteinsatz (Inlay) mit einem Anteil an metallischem Bindemittel von 0 bis 50 Gew.-%, vorzugsweise 10 bis 25 Gew.-%, aufgebracht ist.

6. Werkzeug mit verschleißfester Diamantschneide nach einem der Ansprüche 1 bis 5, dadurch gekennzeichnet, daß die Oxid-Schicht auf einem polykristallinen Diamanten (Monoblock) mit einem Anteil an metallischem Bindemittel von 0 bis 50 Gew.-%, vorzugsweise 10 bis 25 Gew.-%, aufgebracht ist.

7. Werkzeug mit verschleißfester Diamantschneide nach einem der Ansprüche 1 bis 6, dadurch gekennzeichnet, daß die Oxid-Schicht aus mehreren aufeinanderfolgenden Schichten mindestens eines Oxides der Metalle Magnesium und/oder Yttrium und/oder Titan und/oder Zirkonium und/oder Aluminium besteht.

8. Verfahren zur Herstellung des Werkezeuges mit verschleißfester Diamantschneide nach einem der Ansprüche 1 bis 7, dadurch gekennzeichnet, daß die Oxid-Schicht aus der Gasphase bei niedrigen Gasphasentemperaturen bis zu 800 °C abgeschieden wird, wobei vorzugsweise die Gasphasentemperatur 400 °C bis 600 °C beträgt.

9. Verfahren nach Anspruch 8, dadurch gekennzeichnet, daß die Oxidschicht mittels des nach dem Stand der Technik bekannten Puls-Plasma-CVD-Verfahrens abgeschieden wird.

10. Verwendung des Werkzeuges mit verschleißfester Diamantschneide nach einem der Ansprüche 1 bis 9 als Schneidkörper zur spanenden Bearbeitung von kohlenstoffaffinen oder eisenhaltigen Werkstoffen, insbesondere von Stahl.

## Claims

1. Tool with wear-resistant diamond cutting edge, whereby the surface of the tool has diamond crystals, characterized in that a continuous diamond layer covering the tool entirely or partially is coated with a thin layer of one or more metal oxides.

2. Tool with wear-resistant diamond cutting edge according to claim 1, characterized in that the oxide layer has a thickness between 0.5 and 6 »m, preferably 1 to 3 »m and/or the diamond layer has a thickness of 0.5 »m to 2 mm and/or is fine crystalline and/or free of cracks.

3. Tool with wear-resistant diamond cutting edge according to one of claims 1 to 2, characterized in that the oxide layer consists of at least one oxide of the metals magnesium and/or yttrium and/or titanium and/or zirconium and/or aluminum.

4. Tool with wear-resistant diamond cutting edge according to one of claims 1 to 3, characterized in that the diamond surface is covered by the oxide layer only in the areas where it is subjected to wear and/or that the oxide layer is applied to a composite body coated by diamond at least on one cutting edge, whereby the diamond layer on the composite body preferably consists of amorphus diamond or that the composite body consists of a substrate body and at least one diamond-free intermediate layer.

5. Tool with wear-resistant diamond cutting edge according to one of claims 1 to 4, characterized in that the oxide layer is applied to a monocrystalline diamond insert (inlay) or diamond (monoblock) or is applied to a polycrystalline diamond insert (inlay) with a proportion of metallic bonding agents of 0 to 50 % by weight, preferably 10 to 25 % by weight.

6. Tool with wear-resistant diamond cutting edge according to one of claims 1 to 5, characterized in that the oxide layer is applied to a polycrystalline diamond (monoblock) with a proportion of metallic bonding agents of 0 to 50 % by weight, pereferably 10 to 25 % by weight.

7. Tool with wear-resistant diamond cutting edge according to one of claims 1 to 6, characterized in that the oxide layer consists of several successive layers of at least one oxide of the metals magnesium and/or yttrium and/or titanium and/or zirkonium and/or aluminum.

8. Process for manufacturing the tool with wear-resistant diamond cutting edge according to one of claims 1 to 7, characterized in that the oxide layer is deposited from the gas phase at low gas-phase temperatures up to 800°C, whereby preferably the gas-phase temperature ranges between 400°C and 600°C.

9. Process according to claim 8, characterized in that the oxide layer is deposited by means of the pulse-plasma CVD process known to the state of the art.

10. Use of the tool with wear-resistant diamond cutting edge according to one of claims 1 to 9 as a cutting body in the chip-forming machining of carbon-affinitive or iron-containing materials, especially of steel.

## Revendications

1. Outil à tranchant diamanté résistant à l'usure, la surface de l'outil présentant des cristaux de diamant,
**caractérisé par le fait**
qu'une couche en diamant fermée s'étendant sur l'outil tout entier ou en partie seulement est complètement ou bien partiellement revêtue d'une couche mince composée d'un seul oxyde métallique ou de plusieurs oxydes métalliques.

2. Outil à tranchant diamanté résistant à l'usure selon la revendication 1, caractérisé par le fait que la couche d'oxyde présente une épaisseur comprise entre 0,5 et 6 »m, et de préférence entre 1 et 3 »m, et / ou que la couche en diamant présente de sa part une épaisseur comprise entre 0,5 »m et 2 mm, et / ou qu'elle présente une structure en fins cristaux et / ou qu'elle est exempte de fissures.

3. Outil à tranchant diamanté résistant à l'usure selon l'une des revendications 1 à 2, caractérisé par le fait que la couche d'oxyde est composée d'au moins un oxyde des métaux tels que le magnésium et / ou le yttrium et / ou le titane et / ou le zirconium et /ou l'aluminium.

4. Outil à tranchant diamanté résistant à l'usure selon l'une des revendications 1 à 3, caractérisé par le fait que la surface en diamant n'est revêtue de la couche d'oxyde qu'aux endroits qui sont soumis à l'usure et l ou que la couche d'oxyde est appliquée sur un corps composite dont au moins un tranchant est revêtu de diamant, la couche en diamant appliquée sur le corps composite étant composée de préférence de diamant amorphe, ou que le corps composite se compose d'un corps substrat et du moins une couche intermédiaire exempte de diamant.

5. Outil à tranchant diamanté résistant à l'usure selon l'une des revendications 1 à 4, caractérisé par le fait que la couche d'oxyde est appliquée sur un insert de diamant (inlay) ou un diamant (monobloc) monocristallins ou bien sur un insert de diamant (inlay) polycristallin avec un pourcentage en liant métallique compris entre 0 et 50 % en poids, et de préférence entre 10 et 25% en poids.

6. Outil à tranchant diamanté résistant à l'usure selon l'une des revendications 1 à 5, caractérisé par le fait que la couche d'oxyde est appliquée sur un diamant polycristallin (monobloc) avec un pourcentage en liant métallique compris entre 0 et 50 % en poids, et de préférence entre 10 et 25 % en poids.

7. Outil à tranchant diamanté résistant à l'usure selon l'une des revendications 1 à 6, caractérisé par le fait que la couche d'oxyde se compose d'une succession de plusieurs couches d'au moins un oxyde des métaux tels que le magnésium et / ou le yttrium et / ou le titane et/ou le zirconium et /ou l'aluminium.

8. Procédé de fabrication de l'outil à tranchant diamanté résistant à l'usure selon l'une des revendications 1 à 7, caractérisé par le fait que la couche d'oxyde est déposée directement de la phase gazeuse à de basses températures de phase gazeuse allant jusqu'à 800 °C, la température de phase gazeuse étant de préférence comprise entre 400 °C et 600 °C.

9. Procédé selon la revendication 8, caractérisé par le fait que la couche d'oxyde est déposée par le biais du procédé CVD d'impulsions à plasma connu selon l'art antérieur.

10. Utilisation de l'outil à tranchant diamanté résistant à l'usure selon l'une des revendications 1 à 9 en tant que corps de coupe pour usinage à enlèvement de copeaux de matériaux affines de carbone ou ferreux, de préférence de l'acier.
